# EUROPÄISCHE PATENTSCHRIFT

(11) **EP 0 798 502 B1**
(45) Veröffentlichungstag und Bekanntmachung des Hinweises auf die Patenterteilung: **01.08.2001**
(21) Anmeldenummer: 97103500.1
(22) Anmeldetag: 04.03.1997
(51) Int. Cl.: F16K 37/00, G01D 5/22

(54) **Lage- oder Wegesensor**
Position or displacement sensor
Capteur de position ou de déplacement

(30) Priorität: 30.03.1996 DE 19612835
(43) Veröffentlichungstag der Anmeldung: 01.10.1997
(73) Patentinhaber: ROBERT BOSCH GMBH, 70442 Stuttgart (DE)
(72) Erfinder: Leutner, Volkmar, 71292 Friolzheim (DE); Blumendeller, Wilhelm, 71691 Freiberg (DE)

(56) Entgegenhaltungen:
- EP-A- 0 183 919
- US-A- 3 967 064

## Beschreibung

### Stand der Technik

Die Erfindung betrifft einen Lage- oder Wegsensor, insbesondere für ein hydraulisches oder pneumatisches Regelventil, nach der Gattung des Hauptanspruchs.

Es ist bereits eine Regelventil aus der EP 0 183 919 B1 bekannt, bei dem die Messung der Stellung des Ventilkolbens über ein induktives Meßsystem erfolgt, das im Prinzip als Differentialdrossel oder Differentialtransformator ausgebildet ist. Hier befindet sich ein mit dem Kolben oder Schieber des Ventils verbundener Wegaufnehmerkern in einem Druckrohr aus unmagnetischem Material im Einflußbereich der um das Druckrohr herum angebrachten induktiven Anordnung. Durch eine Ansteuerung der induktiven Anordnung mit Rechteckimpulsen und die Messung des durch die Kolbenstellung beeinflußten Stromanstiegs lassen sich der Kolbenstellung entsprechende digitale Signale gewinnen, die einer *digitalen* Auswerteschaltung oder einem Regelkreis zuführbar sind.

Die maximal auswertbare Phasenverschiebung beträgt bei dem oben beschriebenen bekannten Ventil jedoch nur 90° und ist über einen relativ weiten Bereich einer Induktivitätsänderung gestreckt, was zu einer eingeschränkten Auflösung führt.

*Es ist für sich gesehen aus der US-PS 3,967,064 bekannt, dass zur Messung der Auslenkung bewegter Elemente schwingfähige Schaltkreise 2. Ordnung vorgesehen werden, bei denen durch die* *Bewegung des Elements eine induktive Verstimmung der Schalkkreise erfolgt und die dadurch erfolgte Phasenverschiebung als Maß für die Bewegung ausgewertet wird. Die Auslenkungen des Elements liegen hier in einem Bereich von, 0,00254 - 0,0152 CM* (*1 bis 6 milli-inch*), *wobei diese mit* einer *angeschlossenen, herkömmlich aufgebauten analogen Auswerteschaltung weiterverarbeitet werden.*

### Vorteile der Erfindung

*Der erfindungsgemäße Lage- oder Wegsensor der gattungsgemäßen Art ist mit den Merkmalen des Anspruchs 1 und den Weiterbildungen nach den rückbezogenen Ansprüchen insofern vorteilhaft,* als mit der erfindungsgemäßen Anwendung eines Schaltkreises 2.Ordnung insbesondere für eine schnelle und steife Lageregelung eines Regelventils kürzere Abtastzeiten als beim Stand der Technik realisiert werden können. *Dies geschieht gemäß der Erfindung in vorteilhafter Weise derart, dass eine Auswerteschaltung zur Erfassung der Länge* eines *durch eine Phasenverschiebung bewirkten Zeitfensters Δt ein Exclusiv-Oder-Glied und ein einem Zähler nachgeschaltetes Register aufweist, in das die jeweiligen Zählergebnisse einlesbar sind*

Bei dem erfindungsgemäßen Schaltkreis 2.Ordnung beträgt der erzielbare Phasenhub bei der Auswertung der durch eine Lageänderung bewirkten Phasenverschiebung eines von einer Wechselspannungsquelle erzeugten Erregersignals 180° gegenüber 90° bei einem Schaltkreis 1.Ordnung mit einer Zusammenschaltung von Induktivitäten und ohmschen Widerständen. Durch die relativ große erzielbare Phasenverschiebung sind auch die sich ergebenden Zeitfenster in der digitalen Auswerte- oder Regelschaltung erheblich vergrößert und damit ist die Auflösung des Weg- oder Lagesensors bei kurzen Abtastzeiten in vorteilhafter Weise verbessert.

Weiterhin ist es bei dem erfindungsgemäßen Schaltkreis 2.Ordnung durch eine hinreichend kleine Dämpfung des Schaltkreises in vorteilhafter Weise möglich, nahezu den gesamten Phasenhub in die unmittelbare Umgebung der Resonanzfrequenz der Spulenanordnung zu legen. Hierdurch können dann bereits durch kleine induktive Änderungen meßbare Phasenschübe erzielt werden. Die Erregerfrequenz für den schwingfähigen Schaltkreises 2.Ordnung sollte dazu in der Nähe der Resonanzfrequenz dieses Schaltkreises bei einer Mittelstellung des Hubkolbens liegen.

*Eine vorteilhafte Weisterbildung der digitalen Auswertung der Ausgangssignale der Spulenanordnung ist mit den in den abhängigen Ansprüchen angegebenen Beispielen für die Auswerteschaltungen möglich,* wobei eine genaue Erfassung der absoluten Lage beispielsweise eines Hubkolbens einschließlich der Richtung der Abweichung von einer Mittellage sichergestellt ist. Die Auswertung der oben erwähnten Zeitfenster kann innerhalb einer Periode des von der Wechselspannungsquelle erzeugten Erregersignals entweder zweimal oder bei asymmetrischen Signalverläufen nur einmal erfolgen.

### Zeichnung

Ein Ausführungsbeispiel des erfindungsgemäßen Lage- oder Wegsensors wird anhand der Zeichnung erläutert. Es zeigen:
Figur 1 ein Schaltbild eines solchen Sensors;
Figur 2 ein Diagramm der Phasenverläufe der auszuwertenden Signale;
Figur 3 ein erstes Ausführungsbeispiel einer digitalen Auswerteschaltung für die Phasenverläufe;
Figur 4 ein auf das Ausführungsbeispiel nach Figur 3 bezogenes Diagramm der Phasenverläufe und der resultierenden Digitalsignale und
Figur 5 ein weiteres Ausführungsbeispiel der digitalen Auswerteschaltung.

### Beschreibung des Ausführungsbeispiels

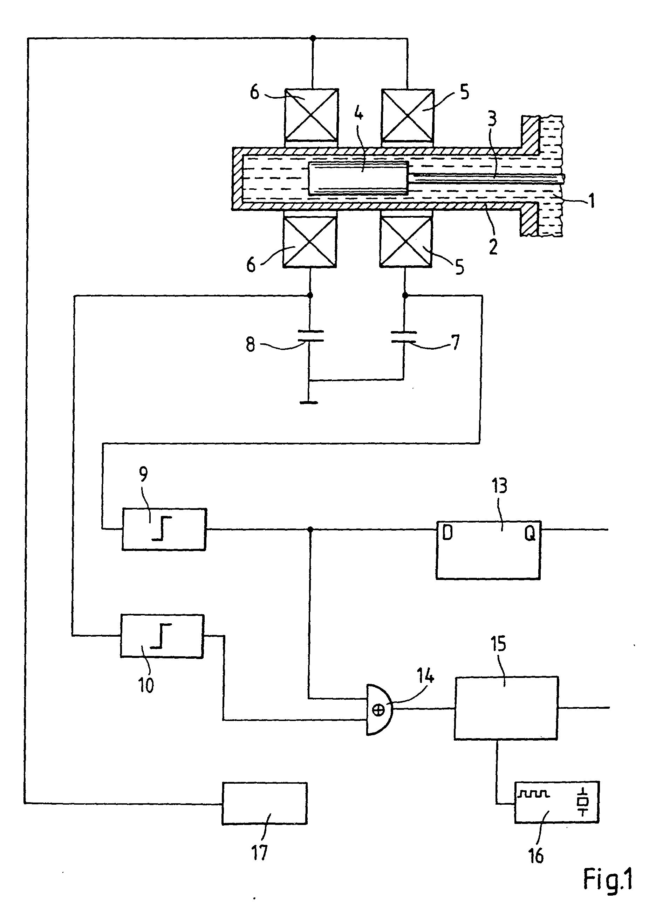

In Figur 1 ist ein Ventilteil 1 als Ausschnitt aus einem an sich bekannten hydraulischen oder pneumatischen Regelventil dargestellt, das ein Druckrohr 2 mit einem Druckmedium aufweist. Mit einem nicht näher gezeigten Ventilschieber ist eine Stange 3 verbunden, an die sich ein Kolben 4 als Wegaufnehmerkern anschließt. Im Einflußbereich des Kolbens 4 befinden sich außerhalb des Druckrohres 2 eine erste Spule 5 und eine zweite Spule 6, die beide auf das Druckrohr 2 aufgesteckt sind. Jeweils ein Anschluß der Spulen 5 und 6 sind mit dem Ausgang einer Wechselspannungsquelle 17 verbunden, die entweder ein sinusförmiges Ausgangssignal U^{*}sin ω t oder vorzugsweise auch ein Rechtecksignal abgibt.

Der andere Anschluß der ersten Spule 5 ist über einen Kondensator 7 und der andere Anschluß der zweiten Spule 6 ist über einen Kondensator 8 an Masse geführt. Der Verbindungspunkt zwischen der Spule 5 und dem Kondensator 7 ist mit einem Komparator 9 und der Verbindungspunkt zwischen der Spule 6 und dem Kondensator 8 ist mit einem Komparator 10 verknüpft. Der Ausgang des Komparators 9 steht einerseits mit einem Eingang eines Exclusiv-ODER-Gliedes 14 und andererseits mit dem Setzeingang D eines Flip-Flops 13 in Verbindung.

Der Ausgang des Komparators 10 ist mit dem weiteren Eingang des Exclusiv-ODER-Gliedes 14 verbunden. Der Ausgang des Exclusiv-ODER-Gliedes 14 steht mit dem Start-Stop-Eingang eines Zählers 15 in Verbindung, wobei der Takteingang des Zähler 15 mit dem Ausgang eines Taktgenerators 16 in Verbindung steht.

Am Ausgang des Zählers 15 ist je nach Ausführung des Zählerbausteins in serieller oder in paralleler Form das Zählergebnis zwischen dem Start- und dem Stop-Signal abgreifbar. Diese Zählergebnis kann einer weiteren digitalen Schaltung bzw. einem Rechner zugeführt werden, wobei digitale Regelbausteine auch direkt mit diesem Ausgangssignal zu beaufschlagt werden können. Am Ausgang Q des Flip-Flops 13 ist darüber hinaus ein Vorzeichen- bzw. Richtungssignal abgreifbar, welches angibt in welcher Richtung der Kolben 4 aus seiner Ruhelage zwischen den beiden Spulen 5 und 6 verschoben ist.

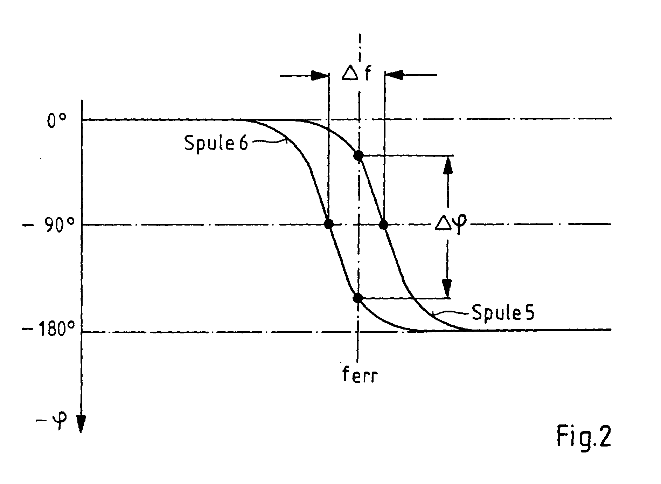

Die Funktion des dargestellten Ausführungsbeispiels wird im Folgenden unter Einbeziehung von Figur 2 erläutert. Die Wechselspannung der Wechselspannungsquelle 17 als Erregersignal bewirkt in den Spulen 5 und 6 einen Spulenstrom, der an den Verbindungspunkten zu den Kondensatoren 7 und 8 zu Spannungsabfällen führt. Die Phasenverschiebung dieser beiden Spannungen zueinander ist ein Maß für die Stellung des Kolbens 4 außerhalb der Mittellage zwischen den beiden Spulen 5 und 6. Der Phasengang ϕ in Abhängigkeit von einer durch eine solche Lageveränderung bewirkte Induktivitätsänderung ist in der Figur 2 dargestellt. Diese durch eine Kolbenbewegung verursachte Induktivtätsänderung korreliert hier mit einer Frequenzänderung Δf, wobei die Phasenänderung Δϕ im Bereich der Resonanz ωₒ erfolgt.

Für den Fall, daß der Kolben 4 sich genau in der Mitte zwischen den beiden Spulen 5 und 6 befindet, ergibt sich eine identische Phasenlage der beiden Signale an den Verbindungspunkten zu den Kondensatoren 7 und 8, so daß die Komparatoren 9 und 10 zu gleichen Zeiten schalten und damit das Zeitfenster Δt=0 ist . Bei einer Verschiebung aus dieser Mittellage des Kolbens 4 ergibt sich hier eine unterschiedliche Phasenlage der beiden Signale gemäß des Phasenverlaufs nach der Figur 2 und somit schalten die Komparatoren 9 und 10 zeitlich unterschiedlich und erzeugen damit das für die Auswertung erforderliche Zeitfenster Δt.

Die Ermittlung der Länge des Zeitfensters Δt erfolgt mit dem digitalen Zähler 15, wobei zusätzlich ein Richtungssignal der Phasenänderung mit dem Flip-Flop 13 erfaßt wird und ebenfalls zur Weiterverarbeitung zur Verfügung steht. Diese an sich aus der EP 0 183 919 B1 bekannte Auswertung dieser Schaltzeitverschiebung erlaubt damit eine Erfassung des Lage- oder Wegsignals des Kolbens 4. Beim erfindungsgemäßen Ausführungsbeispiel beträgt die maximal auswertbare Phasenverschiebung jedoch 180°, wie es aus der Figur 2 ersichtlich ist, womit eine deutlich gesteigerte Auflösung erreicht wird.

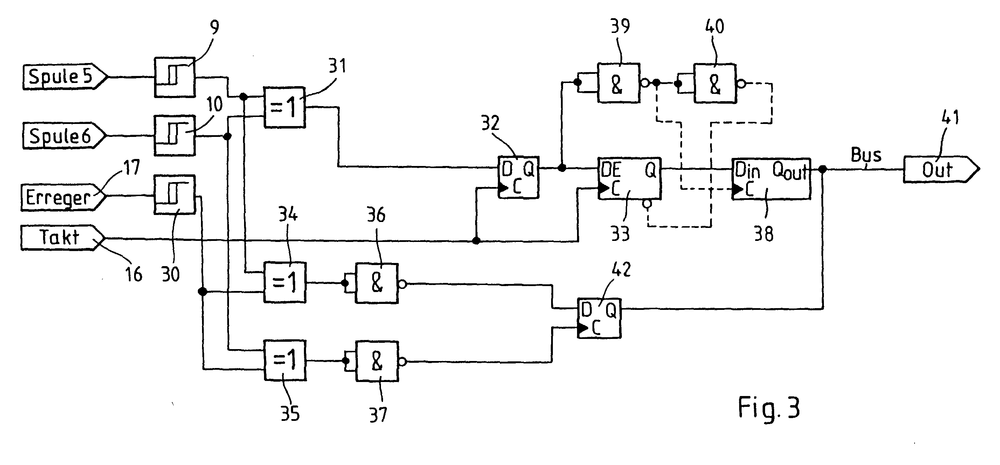

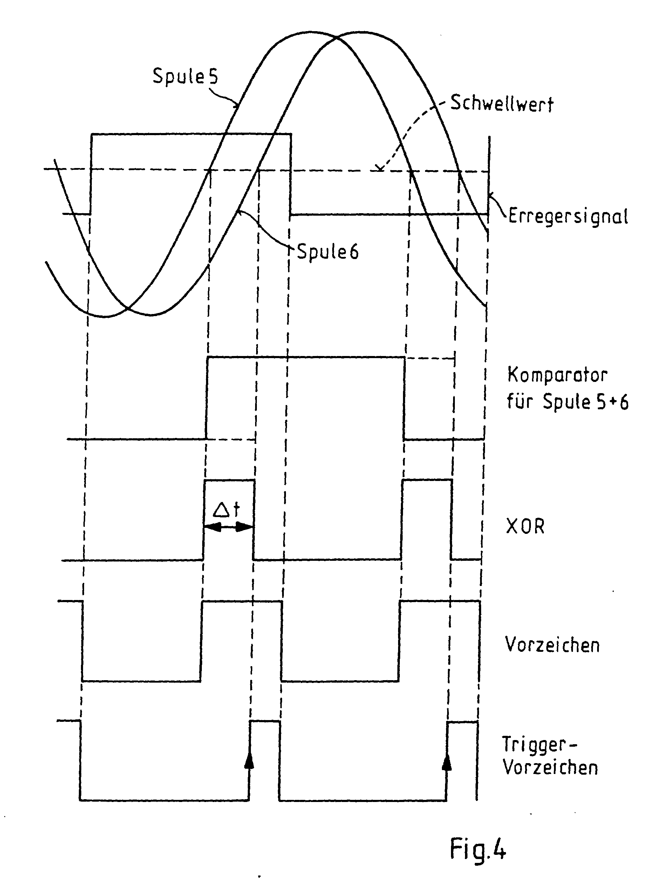

Bei einem Ausführungsbeispiel einer Auswerteschaltung nach Figur 3 sind die Spulen 5 und 6 (vgl. Figur 1) schematisch dargestellt; die Ausgangssignale der Komparatoren 9 und 10 werden hier jedoch im Unterschied zum Ausführungsbeispiel nach der Figur 1 über ein Exclusiv-ODER-Glied 31 (XOR) auf den Setzeingang D eines Flip-Flops 32 geführt. Zum besseren Verständnis dieses Ausführungsbeispiels wird zusätzlich auf das Diagramm nach Figur 4 verwiesen.

Die Ausgangssignale der Spulen 5 und 6 sowie das von einem Komparator 30 umgewandelte Erregersignal sind oben in diesem Diagramm gezeigt. Das Ausgangssignal des Komparators 9 ist darunter mit einem durchgehenden Strich und das Ausgangssignal des Komparators 10 mit einem unterbrochenem Strich gezeichnet. Daraus wird mit dem Exclusiv-ODER-Glied 31 ein Signal für die Dauer dieses Zeitfensters Δt erzeugt in dem durch jeweils einem der Komparatoren 9 oder 10 ein "0"Signal und bei dem jeweils anderen ein "1"Signal erzeugt wird. Die Länge des Zeitfensters Δt ist somit auch hier ein Maß für die Phasenverschiebung zwischen den Ausgangssignalen der Spulen 5 und 6.

Bei der Auswerteschaltung nach Figur 3 wird dieses Zeitfenster Δt mit einem Zähler 33 erfaßt. Um keine undefinierten Zählzustände im Zähler 33 aufkommen zu lassen, wird der Zähler 33 ebenso wie das Flip-Flop 32 mit dem Ausgangssignal des Taktgenerators 16 synchron angesteuert, damit das auszuwertende Zeitfenster Δt über das Flip-Flop 32 mit dem Zähler 33 synchronisiert werden kann.

Beim Ausführungsbeispiel nach der Figur 1 sowie nach den bisher beschriebenen Schaltungsteilen der Figur 3 wird der Zähler 15 (Fig.1) bzw. Zähler 33 (Fig.3) veranlaßt, das Zeitfenster Δt jeweils zweimal während der Periode des Ausgangssignals der Spulen 5 und 6 zu zählen. Ein Vorzeichenwechsel kann jedoch hier zunächst nicht erkannt werden, da ein Vorzeichensignal nur einmal während einer Periode erzeugt wird.

Beim Ausführungsbeispiel nach der Figur 3 wird zusätzlich zu den Ausgangssignalen der Spulen 5 und 6 noch das Erregersignal der Wechselspannungsquelle 17 zur Auswertung herangezogen. Dadurch, daß bei jeweils einem weiteren Exclusiv-ODER-Glied 34 und 35 für die Ausgangssignale der Komparatoren 9 und 10, mit jeweils nachgeschaltetem NAND-Glied 36 und 37, auch noch das Erregersignal herangezogen wird, kann auch ein Vorzeichensignal zweimal während der Periode der Spulensignale erzeugt werden. Ein Vorzeichenwechsel während einer Periode wird somit jederzeit erkannt.

Um ein digitales Lagesignal des Sensors unabhängig von den Taktzyklen des Sensors aus der Auswerteschaltung auslesen zu können, ist dem Zähler 33 ein Register 38 nachgeschaltet. Die Übergabe der Zählerstände zum Register 38 und das anschließende Rücksetzen des Zählers 33 erfolgt bei diesem Ausführungsbeispiel über zwei hintereinandergeschaltete NAND-Glieder 39 und 40. Das erste NAND-Glied 39 sorgt für einen Start der Übergabe des Zählerstandes an das Register 38 nach dem Ende des Zeitfensters Δt, wobei sichergestellt wird, daß aufgrund der Schaltzeit des NAND-Gliedes 39 der Zählvorgang im Zähler 33 auch beendet ist. Auch der Rücksetzimpuls des zweiten NAND-Gliedes 40 erfolgt derart, daß aufgrund der Schaltzeit die Übertragung ins Register sicher beendet wurde. Falls die vorhandenen Schaltzeiten der NAND-Glieder 39 und 40 nicht ausreichen, können hier zur Zeitverzögerung noch zusätzliche AND-Glieder nachgeschaltet werden.

An einem digitalen Ausgang 41 der Auswerteschaltung nach der Figur 3 liegt somit ständig ein auswertbares Lagesignal aus dem Register 38 auslesbar, wobei ein zusätzlich aufgeschaltetes Vorzeichensignal auch die Richtung einer Verschiebung aus der Mittellage angibt. Dies Vorzeichensignal (vgl. auch Fig. 4) wird aus den Ausgangssignalen der NAND-Glieder 36 und 37 über ein Flip-Flop 42 jeweils zweimal während der Periode der Ausgangssignale der Spulen 5 und 6 gebildet.

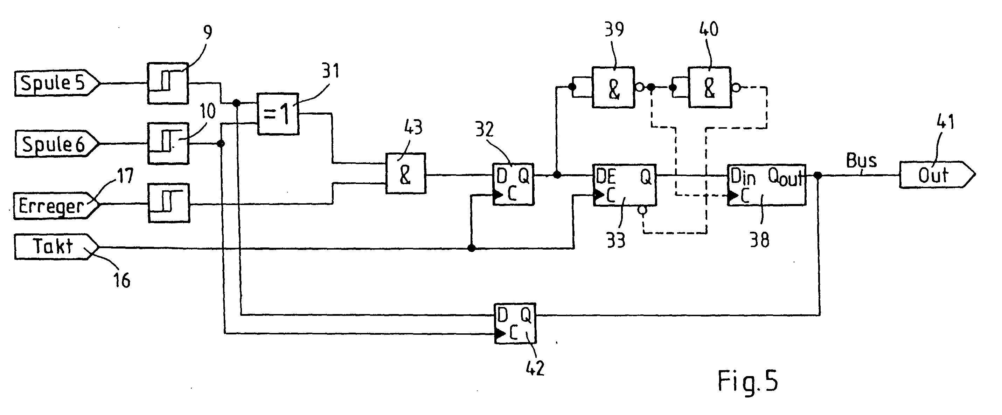

Mit dem Ausführungsbeispiel nach Figur 5 ist eine Auswerteschaltung realisiert, die im Unterschied zu den vorher beschriebenen nur eine einmalige Auswertung der Phasenlage der Ausgangssignale der Spulen 5 und 6 während einer Periode vornimmt. Dieses Ausführungsbeispiel wird bei Sensoren angewandt, bei denen aufgrund einer Asymmetrie der Spulensignalverläufe zwei unterschiedlich lange Zeitfenster Δt im Verlauf einer Periode entstehen würden und somit keine eindeutige Erfassung eines Lagesignals mit einer zweimaligen Auswertung möglich ist.

Das Ausgangssignal des Exclusiv-ODER-Gliedes 31 wird bei diesem Ausführungsbeispiel über ein AND-Glied 43 mit dem Erregersignal der Wechselspannungsquelle 17 verknüpft und über das Flip-Flop 42 dem Zähler 33 zugeführt. Die Bildung des Vorzeichensignals kann hierbei direkt aus den Ausgangssignalen der Komparatoren 9 und 10 über das Flip-Flop 42 erfolgen.

## Patentansprüche

1. Lage- oder Wegsensor zur Erfassung einer Ventilstellung, mit einem sich mit einem Kolben (4) des Ventils bewegenden Wegaufnehmerkern, der sich im Einflußbereich einer induktiven Anordnung (5,6) aus mindestens zwei in der Bewegungsrichtung des Kolbens (4) nebeneinander angeordneten Spulen (5,6) befindet, bei denen zur Bildung von Schaltkreisen 2. Ordnung jede Spule (5,6) mit einem Kondensator (7,8) in Reihe geschaltet und mit einer Wechselspannung beaufschlagt ist, deren Erregerfrequenz in der Nähe der Resonanzfrequenz der Schaltkreise 2. Ordnung liegt und mit einer digitalen Auswerteschaltung zur Messung der durch eine Lageänderung des Kolbens (4) hervorgerufenen Verstimmung der induktiven Anordnung (5,6), wobei als Verstimmung der induktiven Anordnung (5,6) eine Phasenverschiebung der jeweiligen gemessenen Wechselspannungen zueinander mittels Komparatoren (9,10) auswertbar ist, die Auswerteschaltung zur Erfassung der Länge eines durch die Phasenverschiebung bewirkten Zeitfensters Δ t ein Exclusiv-Oder-Glied (31) und ein einem Zähler (33) nachgeschaltetes Register (38) aufweist, in das die jeweiligen Zählergebnisse einlesbar sind und das Einlesen der Zählerstände in das Register (38) und das Rücksetzen des Zählers (33) mit den Ausgangssignalen zweier hintereinandergeschalteter NAND-Glieder (39,40) gesteuert wird, wobei diese NAND-Glieder (39,40) vom Signal des Zeitfensters Δt angesteuert sind.

2. Lage- oder Wegsensor nach Anspruch 1, dadurch gekennzeichnet, daß die Wechselspannungen zwischen den Verbindungspunkten der jeweiligen Spule (5,6) und dem jeweiligen Kondensator (7,8) abnehmbar ist.

3. Lage- oder Wegsensor nach einem der Ansprüche 1 oder 2, dadurch gekennzeichnet, daß Schaltungsbausteine (34,35,36,37,42) zur Ermittlung eines Vorzeichensignals mit den Ausgangssignalen der Komparatoren (9,10) und dem Erregersignal der Wechselspannungsquelle (17) derart beaufschlagt sind, daß ein von der Richtung der Phasenverschiebung abhängiges Vorzeichensignal zweimal während der Periode der Wechselspannung erzeugbar ist.

4. Lage- oder Wegsensor nach Anspruch 3, dadurch gekennzeichnet, daß die Schaltungsbausteine (34,35,36,37,42) jeweils eine Reihenschaltung eines Exclusiv-ODER-Gliedes (34,35) mit einem NAND-Glied (36,37) bilden, wobei ein Eingang des Exclusiv-ODER-Gliedes (34) mit dem Ausgangssignal des Komparators (9) und ein Eingang des Exclusiv-ODER-Gliedes (35) mit dem Ausgangssignal des Komparators (10) und die jeweils zweiten Eingänge der Exclusiv-ODER-Glieder (34,35) mit dem Erregersignal beaufschlagt sind und daß die Ausgänge der NAND-Glieder (36,37) mit jeweils einem Eingang eines Flip-Flops (42) verbunden sind, wobei das Ausgangssignal des Flip-Flops (42) das Vorzeichensignal darstellt.

5. Lage- oder Wegsensor nach einem der Ansprüche 1 bis 4, dadurch gekennzeichnet, daß ein Flip-Flop (42) zur Ermittlung eines Vorzeichensignals direkt mit den Ausgangssignalen der Komparatoren (9,10) derart beaufschlagt ist, daß ein von der Richtung der Phasenverschiebung abhängiges Vorzeichensignal einmal während der Periode des Erregersignals erzeugbar ist und daß das Ausgangssignal des Exclusiv-ODER-Gliedes 31 und das Erregersignal über ein AND-Glied 43 auf das Flip-Flop 32 geführt sind.

## Claims

1. Position or displacement sensor for detecting a valve position, having a displacement pickup core which moves with a piston (4) of the valve and is located in the range of influence of an inductive arrangement (5, 6) comprising at least two coils (5, 6) which are arranged next to one another in the direction of movement of the piston (4) and in the case of which, to form second order circuits, each coil (5, 6) is connected in series with a capacitor (7, 8) and has an AC voltage applied to it whose frequency of excitation is close to the resonant frequency of the second order circuits, and having a digital evaluation circuit for measuring the detuning of the inductive arrangement (5, 6), which is caused by a change in the position of the piston (4), where a phase shift of the respective measured AC voltages relative to one another can be evaluated by means of comparators (9, 10) as detuning of the inductive arrangement (5, 6), the evaluation circuit for detecting the length of a time window Δt caused by the phase shift having an Exclusive-OR gate (31) and a register (38) which is connected downstream of a counter (33) and into which the respective count results can be read, and reading of the counter readings into the register (38) and resetting of the counter (33) being controlled using the output signals from two NAND gates (39, 40) connected in series, these NAND gates (39, 40) being driven by the signal of the time window Δt.

2. Position or displacement sensor according to Claim 1, characterized in that the AC voltages can be picked off between the junction points of the respective coil (5, 6) and the respective capacitor (7, 8).

3. Position or displacement sensor according to one of Claims 1 and 2, characterized in that circuit modules (34, 35, 36, 37, 42) for determining an arithmetic sign signal have the output signals from the comparators (9, 10) and the excitation signal from the AC voltage source (17) applied to them such that an arithmetic sign signal which is dependent on the direction of the phase shift can be produced twice during the period of the AC voltage.

4. Position or displacement sensor according to Claim 3, characterized in that the circuit modules (34, 35, 36, 37, 42) each form a series circuit comprising an Exclusive-OR gate (34, 35) and an NAND gate (36, 37), one input of the Exclusive-OR gate (34) having the output signal from the comparator (9) applied to it and one input of the Exclusive-OR gate (35) having the output signal from the comparator (10) applied to it and the respective second inputs of the Exclusive-OR gates (34, 35) having the excitation signal applied to them, and in that the outputs of the NAND gates (36, 37) are each connected to one input of a flip-flop (42), the output signal from the flip-flop (42) representing the arithmetic sign signal.

5. Position or displacement sensor according to one of Claims 1 to 4, characterized in that a flip-flop (42) for determining an arithmetic sign signal has the output signals from the comparators (9, 10) applied to it directly such that an arithmetic sign signal which is dependent on the direction of the phase shift can be produced once during the period of the excitation signal, and in that the output signal from the Exclusive-OR gate 31 and the excitation signal are supplied to the flip-flop 32 via an AND gate 43.

## Revendications

1. Capteur de position ou de déplacement pour saisir une position de distributeur comprenant :
• un noyau de capteur de déplacement qui se déplace avec le piston (4) du distributeur, ce noyau se trouvant dans la plage d'influence d'un dispositif inductif (5, 6) formé d'au moins de deux bobines (5, 6) juxtaposées dans la direction de déplacement du piston (4),
• pour lesquelles, pour former des circuits du deuxième ordre, chaque bobine (5, 6) est montée en série avec un condensateur (7, 8) et reçoit une tension alternative dont la fréquence d'excitation est voisine de la fréquence de résonance du circuit du deuxième ordre,
• un circuit d'exploitation numérique pour mesurer le désaccord du dispositif inductif (5, 6) produit par le changement de position du piston (4),
• le désaccord du dispositif inductif (5, 6) étant exploité comme déphasage des tensions alternatives respectives mesurées à l'aide de comparateurs (9, 10),
• le circuit d'exploitation comportant pour détecter la longueur d'une fenêtre de temps Δt produite par un déphasage, une porte OU-exclusif (31), et en aval d'un compteur (33), un registre (38) enregistrant chaque résultat de comptage respectifs, et
• l'enregistrement des états de comptage dans le registre (38) et la remise à l'état initial du compteur (33) étant commandés par les signaux de sortie de deux portes NI (39, 40) montées l'une derrière l'autre, ces portes NI (39, 40) étant commandées par le signal de la fenêtre de temps Δt.

2. Capteur de position ou de déplacement selon la revendication 1,
caractérisé en ce que
les tensions alternatives sont prises entre les points de liaison des bobines (5, 6) et des condensateurs (7, 8) respectifs.

3. Capteur de position ou de déplacement selon la revendication 1 ou 2,
caractérisé en ce que
pour déterminer un signal de signe algébrique, des composants de circuit (34, 35, 36, 37, 42) reçoivent, les signaux de sortie des comparateurs (9, 10) et le signal d'excitation de la source de tension alternative (17) de façon à générer deux fois pendant la période de la tension alternative, un signal de signe algébrique dépendant de la direction du déphasage.

4. Capteur de position ou de déplacement selon la revendication 3,
caractérisé en ce que
• les composants (34, 35, 36, 37, 42) constituent chacun un montage en série d'une porte OU-exclusif (34, 35) avec une porte NI (36, 37),
• une entrée de la porte OU-exclusif (34) recevant le signal de sortie du comparateur (9) et une entrée de la porte OU-exclusif (35) recevant le signal de sortie du comparateur (10) et les secondes entrées respectives des portes OU-exclusif (34, 35) reçoivent le signal d'excitation et,
• les sorties des portes NI (36, 37) sont reliées chaque fois à une entrée d'un flip-flop (42) dont le signal de sortie représente le signal de signe algébrique.

5. Capteur de position ou de déplacement selon l'une des revendications 1 à 4,
caractérisé en ce que
• un flip-flop (42) pour déterminer un signal de signe algébrique reçoit directement les signaux de sortie des comparateurs (9, 10) pour générer un signal de signe algébrique dépendant de la direction du déphasage, une fois pendant la période du signal d'excitation, et
• le signal de sortie de la porte OU-exclusif (31) et le signal d'excitation sont appliqués au flip-flop (32) par l'intermédiaire d'une porte ET (43).
